(19) Europäisches Patentamt
European Patent Office
Office européen des brevets

(11) Veröffentlichungsnummer: **0 432 581 B1**

# (12) EUROPÄISCHE PATENTSCHRIFT

(45) Veröffentlichungstag der Patentschrift: **17.05.95**

(21) Anmeldenummer: **90122798.3**

(22) Anmeldetag: **29.11.90**

(51) Int. Cl.6: **C08L 69/00**, C08K 5/523, //(C08L69/00,25:02,51:04,27:18, 83:04)

## (54) Thermoplastische Polycarbonatformmassen mit flammwidrigen Eigenschaften.

(30) Priorität: **12.12.89 DE 3940927**

(43) Veröffentlichungstag der Anmeldung:
**19.06.91 Patentblatt 91/25**

(45) Bekanntmachung des Hinweises auf die Patenterteilung:
**17.05.95 Patentblatt 95/20**

(84) Benannte Vertragsstaaten:
**DE ES FR GB IT NL**

(56) Entgegenhaltungen:
**EP-A- 0 174 493**
**DE-A- 3 824 356**

**PATENT ABSTRACTS OF JAPAN vol. 12, no. 186 (C-500)(3033) 31. Mai 1988 & JP-A-62 292 850**

**PATENT ABSTRACTS OF JAPAN vol. 11, no. 24 (C-399)(2471) 23. Januar 1987 & JP-A-61 197 653**

(73) Patentinhaber: **BAYER AG**

**D-51368 Leverkusen (DE)**

(72) Erfinder: **Fuhr, Karl, Dr.**
**Krüllsdyk 55**
**W-4150 Krefeld (DE)**
Erfinder: **Müller, Friedemann, Dr.**
**Am Steinacker 5**
**W-4040 Neuss 21 (DE)**
Erfinder: **Ott, Karl-Heinz, Dr.**
**Paul-Klee-Strasse 54**
**W-5090 Leverkusen 1 (DE)**
Erfinder: **Schoeps, Jochen, Dr.**
**Windmühlenstrasse 126**
**W-4150 Krefeld 1 (DE)**
Erfinder: **Peters, Horst, Dr.**
**Winterbergstrasse 25**
**W-5090 Leverkusen 3 (DE)**
Erfinder: **Ballas, Werner**
**Iltisweg 26**
**W-4047 Dormagen 1 (DE)**

**EP 0 432 581 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind thermoplastische Formmassen, enthaltend

A) 40 bis 90 Gewichtsteile, vorzugsweise 50 bis 70 Gewichtsteile, eines thermoplastischen aromatischen Polycarbonats,

B) 10 bis 50 Gewichtsteile, vorzugsweise 15 bis 35 Gewichtsteile, eines thermoplastischen Copolymerisats aus 50 bis 95 Gew.-% Styrol, α-Methylstyrol, kernalkyliertem Styrol, Halogenstyrol oder Mischungen daraus und 5 bis 50 Gew.-% Acrylnitril, Methacrylnitril, Alkylacrylat, Alkylmethacrylat, Maleinsäureanhydrid, N-substituiertem Maleinimid, Vinylacetat oder Mischungen daraus,

C) 0 bis 25 Gewichtsteile, vorzugsweise 0 bis 20 Gewichtsteile, Pfropfpolymerisat, hergestellt aus

C.1) 5 bis 90 Gewichtsteilen, vorzugsweise 30 bis 80 Gewichtsteilen, einer Mischung aus:

C.1.1) 50 bis 95 Gew.-% Styrol, α-Methylstyrol, Halogenstyrol, kernalkyliertem Styrol, Methylmethacrylat oder Mischungen daraus und

C.1.2) 5 bis 50 Gew.-% (Meth)Acrylnitril, Methylmethacrylat, Maleinsäureanhydrid, N-substituiertem Maleinimid oder Mischungen daraus, auf

C.2) 10 bis 95 Gewichtsteilen, vorzugsweise 20 bis 70 Gewichtsteilen, eines Kautschuks mit einer Glastemperatur $TG \leqq 10\,°C$ aus z.B. Polybutadien-, Alkylacrylat-, EPDM(Ethylen-Propylen-Dien-Monomer)- oder Silikonkautschuken,

D) 1 bis 25 Gewichtsteile, vorzugsweise 2 bis 20 Gewichtsteile, bezogen jeweils auf 100 Gewichtsteile Gesamtgewicht aus A), B) und gegebenenfalls C), einer Phosphorverbindung,

E) 0 bis 5 Gewichtsteile, vorzugsweise 0,1 bis 1,0 Gewichtsteile, bezogen auf 100 Gewichtsteile A), B) und gegebenenfalls C), eines Tetrafluorethylenpolymerisats mit mittleren Teilchengrößen von 0,05 bis 20 µm und einer Dichte von 1,2 bis 1,9 $g/cm^3$ , wobei vorzugsweise eine koagulierte Mischung von Emulsionen des Tetrafluorethylenpolymerisats E) mit Emulsionen von Pfropfpolymerisat C) eingesetzt wird, worin das Gewichtsverhältnis Pfropfpolymerisat C) zum Tetrafluorethylenpolymerisat E) zwischen 95:5 und 60:40 liegt und der Gehalt an Cofällung von C) und E), bezogen auf 100 Gewichtsteile A), B) und C), zwischen 0,1 und 20,0 Gewichtsteilen liegt,

F) 0 bis 10 Gewichtsteile, vorzugsweise 0,2 bis 3,0 Gewichtsteile, bezogen auf 100 Gewichtsteile A), B) und gegebenenfalls C), eines Silikonharzes, der Summenformel (VII),

$$R_xSi(OR')_yO_{\frac{4-x-y}{2}} \qquad (VII)$$

worin

- R für einen einwertigen Kohlenwasserstoffrest steht, der gegebenenfalls selbst substituiert sein kann, insbesondere aber eine Methylgruppe und/oder Phenylgruppe bedeutet,
- R' eine Alkylgruppe oder ein Wasserstoffrest ist,
- x einen Wert von 0,75 bis 1,75 und
- y einen Wert von 0,0001 bis 0,5 besitzen

und worin das Silikonharz aufgebaut ist aus Einheiten der Formel

$SiO_{4/2}$, $RSiO_{3/2}$, $R_2SiO_{2/2}$ und/oder $R_3SiO_{1/2}$, wobei vorzugsweise eine koagulierte Mischung von Emulsionen des Silikonharzes F), gegebenenfalls auch eine Emulsion einer Lösung von ihm z.B. in Toluol, mit Emulsionen von Pfropfpolymerisat C) eingesetzt wird, worin das Gewichtsverhältnis Pfropfpolymerisat C) zum Silikonharz F) zwischen 99,9:0,1 und 50:50 Gew.-% liegt und der Gehalt an Cofällung von C) und F), bezogen auf 100 Gewichtsteile A), B) und C), zwischen 0,1 und 30,0 Gewichtsteilen liegt,

wobei mindestens E) oder F) in Mengen von 0,05 Gewichtsteilen, pro 100 Gewichtsteile A), B) und gegebenenfalls C, vorliegen,

die dadurch gekennzeichnet sind, daß sie als Phosphorverbindungen D) solche der Formel (I) enthalten,

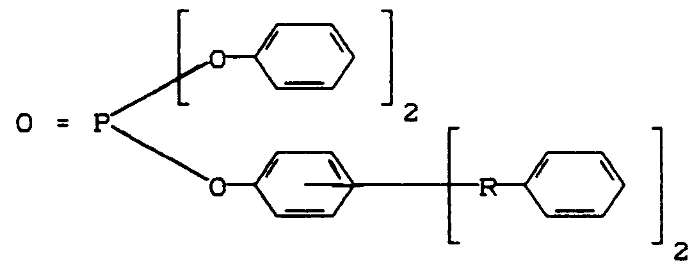

(I)

worin

R eine $-CH_2-$,

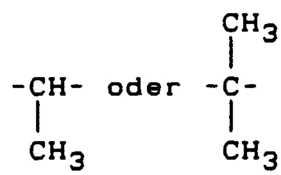

Gruppe ist und die aromatischen Bereiche auch Alkyl-substituiert sein können.

Polycarbonatformmassen, die Phosphatester der Formel (II) enthalten,

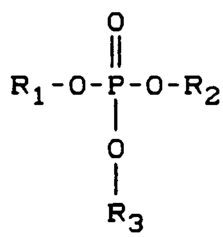

(II)

worin

$R_1$, $R_2$ und $R_3$ gleich oder verschieden und $C_1$-$C_{20}$-Kohlenwasserstoffreste sind, wobei mindestens zwei der Reste $R_1$, $R_2$ und $R_3$ substituierte oder unsubstituierte Arylreste darstellen, sind bekannt. (Siehe DE-A-3 429 481 und DE-A-3 430 234). Die Verbindungen der Formel (I) kommen darin jedoch nicht vor.

Polycarbonatformmassen, die Phosphorverbindungen der Formel (III) enthalten,

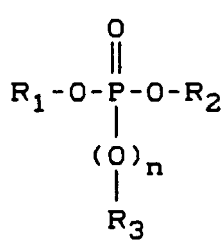

(III)

worin

$R_1$, $R_2$ und $R_3$ unabhängig voneinander ein gegebenenfalls halogeniertes $C_1$-$C_8$-Alkyl oder ein gegebenenfalls halogeniertes $C_6$-$C_{20}$-Aryl und "n" 0 oder 1 ist, sind ebenfalls bekannt.

[Siehe EP-A-0 174 493, DE-A-3 444 869, DE-A-3 444 868, DE-A-3 516 807, DE-A-3 521 388, DE-A-3 523 316, DE-A-3 523 314, DE-A-3 545 609, DE-A-3 615 768, DE-A-3 617 511, DE-A-3 628 904 und DE-A-3 629 546].

Die Verbindungen der Formel (I) sind darin wiederum nicht genannt.

Nachteilig bei diesen Formmassen mit einem Gehalt an Phosphaten der Formeln (II) und (III) ist vorwiegend, daß die in diesen Literaturstellen beschriebenen Phosphorsäureester unter Herstell- und

Verarbeitungsbedingungen teilweise flüchtig sind. Eine Molekulargewichtserhöhung der Phosphate durch Verlängerung der Alkylketten an Aromaten reduziert im allgemeinen kaum die Flüchtigkeit, führt jedoch zu einer Wirksamkeitsminderung der Phosphate für flammwidrige Einstellungen, da der Phosphorgehalt abnimmt. Zur Wiederherstellung der flammwidrigen Eigenschaften müssen daher größere Mengen an Phosphoradditiven eingesetzt werden, die z.B. die Vicattemperatur in unerwünschter Weise herabsetzen.

Bekannt ist auch, Polycarbonatformmassen durch Polyphosphate flammwidrig auszurüsten [siehe US-A-4 463 130 und 4 481 338].

Derartige Formmassen haben jedoch den Nachteil, daß sie, da sie mit polymeren Phosphaten versetzt sind, nicht das gewünschte hohe Maß an Fließfähigkeit erreichen.

Überraschend wurde gefunden, daß bei der erfindungsgemäßen Verwendung der Phosphorsäureester der Formel (I) von z.B. 2,4-Dibenzylphenol, 2,4-Di-(1-phenylethyl)-phenol und 2,4-Di-(1-methyl-1-phenylethyl)-phenol die guten Werte der Eigenschaften wie Schlagzähigkeit, Oberflächenbeschaffenheit und ein hoher Grad von Flammwidrigkeit beibehalten werden, die Wärmeformbeständigkeit (gemessen als Vicat B) aber verbessert und die Neigung zum Verdampfen der Phosphorsäureester bei der Verarbeitung der Formmassen sowie die Migration bei Lagerung, besonders in der Wärme, entscheidend zurückgedrängt werden.

Die erfindungsgemäß geeigneten Polycarbonate gemäß Komponente A) können sowohl Homopolycarbonate als auch Copolycarbonate aus den Diphenolen der Formel (IV) sein.

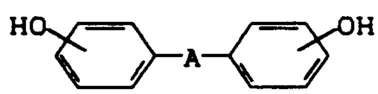

(IV)

Darüber hinaus können die Polycarbonate der Komponente A) insbesondere auch Copolycarbonate aus den Diphenolen (IV) und (IVa) sein,

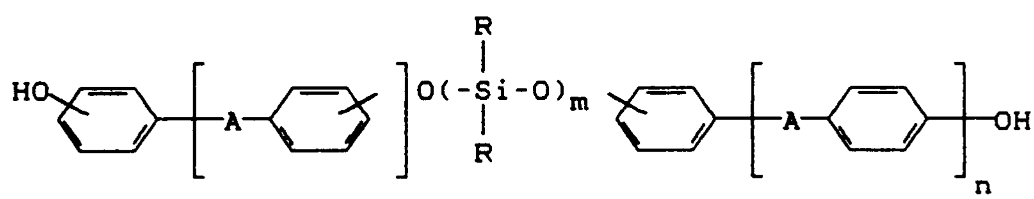

(IVa)

worin

- A eine Einfachbindung, $C_1$-$C_5$-Alkylen, ein $C_2$-$C_5$-Alkyliden, ein $C_5$-$C_6$-Cycloalkyliden, das noch durch Methylgruppen substituiert sein kann, -O-, -S- oder -$SO_2$-, die aromatischen Bereiche durch Methylgruppen oder Halogenatome substituiert sein können,
- n 1 oder null ist,
- R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und
- m eine Zahl zwischen 5 und 100, vorzugsweise zwischen 20 und 80 ist,

und wobei der Gewichtsanteil an Diphenolen der Formel (IVa) in den Copolycarbonaten jeweils so bemessen ist, daß der Gehalt an Diorganosiloxy-Einheiten (V)

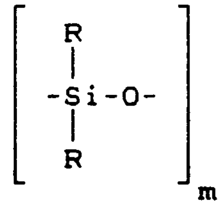

(V)

in Polycarbonat A) zwischen 1 und 25 Gew.-%, vorzugsweise zwischen 2,5 und 25 Gew.-%, beträgt.

Die Polycarbonate gemäß Komponente A) können sowohl linear als auch verzweigt sein, sie können aromatisch gebundenes Halogen, vorzugsweise Brom und/oder Chlor enthalten, sie können aber auch frei von aromatisch gebundenem Halogen, also halogenfrei, sein.

Die Polycarbonate der Komponente A) können sowohl einzeln als auch im Gemisch eingesetzt werden. In den Fällen, in denen die Komponente A) ein Gemisch aus siloxanhaltigen Polycarbonaten und siloxanfreien Polycarbonaten ist, können die siloxanhaltigen Polycarbonate auch einen Gehalt an Diorganosiloxy-Einheiten von mehr als 25 Gew.-% enthalten, sofern durch die Abmischung mit den siloxanfreien Polycarbonaten der Gehalt im Polycarbonatgemisch wiederum zwischen 1 und 25 Gew.-% liegt.

Die Diphenole der Formel (IV) sind entweder literaturbekannt oder Gegenstand der deutschen Patentanmeldungen DE-A-38 32 396 oder DE-A-38 42 931 oder nach literaturbekannten Verfahren herstellbar; Polydiorganosiloxane mit Hydroxyaryloxy-Endgruppen gemäß Formel (IVa) sind ebenfalls bekannt (siehe z.B. US-A-3 419 634) bzw. nach literaturbekannten Verfahren herstellbar.

Die Herstellung der erfindungsgemäß geeigneten Polycarbonate gemäß Komponente A) ist literaturbekannt oder Gegenstand der deutschen Patentanmeldungen DE-A-38 32 396 und DE-A-38 42 931 und kann z.B. mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird Die Darstellung von polydiorganosiloxanhaltigen Polycarbonaten ist z.B. in DE-A-3 334 782 beschrieben.

Geeignete Kettenabbrecher sind z.B. Phenol oder p-tert.-Butylphenol, aber auch langkettige Alkylphenole wie 4-(1,3-Tetramethyl-butyl)-phenol gemäß DE-A-2 842 005 oder Monoalkylphenole oder Dialkylphenole mit insgesamt 8 bis 20 C-Atomen in den Alkylsubstituenten gemäß DE-A-35 06 472, wie z.B. p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzten Diphenole (IV) und (IVa).

Die erfindungsgemäß geeigneten Polycarbonate gemäß Komponten A) können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen OH-Gruppen.

Sie haben mittlere Gewichtsmittelmolekulargewichte ($\overline{M}_W$, gemessen z.B. durch Ultrazentrifugation oder Streulichtmessung) von 10.000 bis 200.000, vorzugsweise von 20.000 bis 80.000).

Geeignete Diphenole der Formel (IV) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan oder 1,1-Bis-(4-hydroxyphenyl)-3,3,5-trimethylcyclohexan.

Bevorzugte Diphenole der Formel (IV) sind 2,2-Bis-(4-hydroxyphenyl)-propan und 1,1-Bis-(4-hydroxyphenyl)-cyclohexan. Es können auch Mischungen von Diphenolen eingesetzt werden.

Geeignete Diphenole der Formel (IVa) sind solche, in denen R Methyl, Ethyl, Propyl, n-Butyl, tert.-Butyl und Phenyl ist. Es können auch Mischungen von Diphenolen der Formel (IVa) eingesetzt werden.

Bevorzugte Diphenole der Formel (IVa) sind die der Formel (IVb),

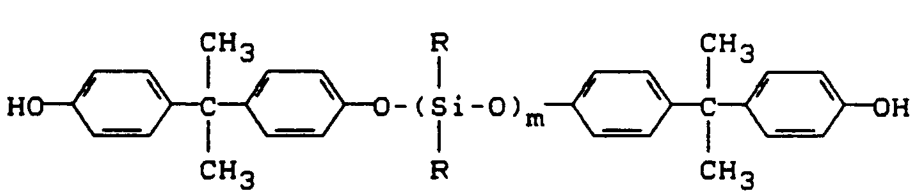

(IVb)

worin

die R's gleich sind und die vorstehend genannte Bedeutung haben, also Methyl etc. und Phenyl bedeuten und

m wiederum eine ganze Zahl zwischen 5 und 100, vorzugsweise zwischen 20 und 80, ist.

Bevorzugte Polydiorganosiloxan-Polycarbonat-Blockcopolymere sind Copolycarbonate der Diphenole der Formel (IV) mit Diphenolen der Formel (IVb).

Erfindungsgemäß geeignete thermoplastische Copolymerisate gemäß Komponente B) sind harzartig, thermoplastisch und kautschukfrei. Besonders bevorzugte Polymerisate B) sind solche aus Styrol, α-Methylstyrol, kernalkyliertem Styrol, Halogenstyrol oder Mischungen daraus mit Acrylnitril, Methacrylnitril, Alkylacrylat, Alkylmethacrylat, Maleinsäureanhydrid, N-substituiertem Maleinimid, Vinylacetat oder Mischungen daraus. Unter kernsubstituierten Styrolen sind kernalkylierte Styrole, wie z.B. p-Methylstyrol, zu verstehen.

Besonders bevorzugte Gewichtsverhältnisse im thermoplastischen Polymerisat B) sind z.B. 60 bis 80 Gew.-% Styrol, α-Methylstyrol, kernsubstituiertes Styrol, Halogenstyrol oder Mischungen daraus und 20 bis 40 Gew.-% Acrylnitril.

Die Polymerisate gemäß Komponente B) sind bekannt und lassen sich durch radikalische Polymerisation, insbesondere durch Emulsions-, Suspensions-, Lösungs- oder Massepolymerisation, herstellen. Die Polymerisate gemäß Komponente B) besitzen vorzugsweise Molekulargewichte $\overline{M}_w$ (Gewichtsmittel, ermittelt durch Lichtstreuung oder Sedimentation) zwischen 15.000 und 200.000.

Zur Herstellung der Pfropfpolymerisate gemäß Komponente C) geeignete Kautschuke sind insbesondere Polybutadiene, Polychloroprene, Polyisoprene, Styrol-Butadiencopolymerkautschuke, Acrylnitril-Butadien-Copolymerkautschuke mit Gelgehalten (gemessen bei 20 °C) größer als 30 Gew.-%, Acrylatkautschuke, EPDM(Ethylen-Propylen-Dien-Monomer)-Kautschuke und Silikonkautschuke. Geeignete Butadien-Styrol-Copolymerkautschuke können bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat) enthalten.

Geeignete Alkylacrylatkautschuke sind solche auf Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, kernalkyliertes Styrol, Halogenstyrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomerer enthalten. Solche Vernetzer sind z.B. Alkylendioldi-(meth)-acrylate, Polyetherdi-(meth)-acrylate, Divinylbenzol, Trivinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomerem, wie Styrol und/oder Acrylnitril, als Kern enthalten.

Die erfindungsgemäß geeigneten Silikonkautschuke enthalten in dispergierter Form wenigstens teilvernetzte, teilchenförmige Silikonkautschuke mit im wesentlichen chemisch eingebauten Gruppen der allgemeinen Formeln

a) $R_2SiO_{2/2}$, $RSiO_{3/2}$, $R_2R^3SiO_{1/2}$, $SiO_{4/2}$ und gegebenenfalls Gruppen der Formel

b) $R^1CH=CH-(R^2)-$, gegebenenfalls in Kombination mit SH-Gruppen,

wobei

- R = einwertiger, gesättigter Kohlenwasserstoffrest, insbesondere $-CH_3$, $-C_6H_5$, gegebenenfalls durch -SH, Halogen, $-C_1$-$C_6$-Oxalkyl substituiert,
- $R^1$ = H, $C_1$-$C_6$-Alkyl, insbesondere H, $CH_3$,
- $R^2$ = Einfachbindung, $C_1$-$C_4$-Alkylen, insbesondere $-CH_2-$, $-C_2H_4-$ und
- $R^3$ = R oder OH ist.

Die Mengen der einzelnen Siloxaneinheiten sind dabei so bemessen, daß auf 100 Mol-Einheiten der Formel $R_2SiO_{2/2}$ 0 bis 0,5 Mol-Einheiten $R_2R^3SiO_{1/2}$, 0 bis 10 Mol-Einheiten der Formel $RSiO_{3/2}$ und 0 bis 3 Mol-Einheiten der Formel $SiO_{4/2}$ vorhanden sind. In bevorzugten Silikonkautschuken sind mindestens 80 % aller Reste R $CH_3$-Gruppen.

Im Falle der Gruppe $R_2R^3SiO_{1/2}$ ist des weiteren möglich, daß einer der drei Reste R eine Hydroxylgruppe darstellt. Besonders bevorzugte Endgruppe ist die Dimethylhydroxysiloxyeinheit.

Die Silikonkautschuke enthalten die Gruppen b) in Mengen von 2 bis 10 Mol-%, bezogen auf die Gesamtheit aller Reste R.

Bevorzugte Kautschuke zur Herstellung der Pfropfpolymerisate C) sind Dien-, Alkylacrylat- und Silikonkautschuke.

Die Kautschuke liegen in den Pfropfpolymerisaten C) in Form wenigstens partiell vernetzter Teilchen einer mittleren Teilchengröße von 0,1 bis 3,0 µm, insbesondere 0,2 bis 0,6 µm, vor. Sie sind wenigstens teilvernetzt, d.h., sie besitzen Gelgehalte von größer 20 Gew.-%, besonders größer 50 Gew.-%, besonders bevorzugt im Bereich von 73 bis 98 Gew.-%.

Die Pfropfpolymerisate C) werden durch radikalische Pfropfcopolymerisate der eingangs definierten Monomergemische aus C.1.1) und C.1.2) in Gegenwart der zu pfropfenden Kautschuke C.2) hergestellt und sind durchweg bekannt. Bevorzugte Herstellungsverfahren für die Pfropfpolymerisate C) sind Emulsions-,

Lösungs-, Masse- oder Suspensionspolymerisation. Besonders bevorzugte Pfropfpolymerisate C) sind die sogenannten ABS-Polymerisate.

Die erfindungsgemäß geeigneten Phosphorverbindungen gemäß Komponente D) sind generell nach bekannten Verfahren herstellbar (siehe beispielsweise Ullmann, Enzyklopädie der technischen Chemie, Bd. 18, S. 301ff, 1979; Houben-Weyl, Methoden der Organischen Chemie, Bd. 12/1, S. 43; Beilstein, Bd. 6, S. 177).

Die aromatischen Bereiche der erfindungsgemäß geeigneten Phosphorverbindungen können alkylsubstituiert sein, wobei die Kohlenstoffkette bis zu etwa 4 Kohlenstoffatome enthalten kann.

Erfindungsgemäß geeignete Phosphorverbindungen gemäß Komponente D), Formel (I), sind beispielsweise Phosphorsäure-2,4-dibenzyl-phenyl-bis-phenylester, Phosphorsäure-2,4-di-(1-phenylethyl)-phenyl-bis-phenylester und Phosphorsäure-2,4-di-(1-methyl-1-phenylethyl)-phenyl-bis-phenylester. Speziell bevorzugt ist der Phosphorsäure-2,4-di-(1-phenylethyl)-phenyl-bis-phenylester.

Verwendet werden die erfindungsgemäß geeigneten Phosphorsaureester der Formel (I) auch in Mischung miteinander sowie in Mischung mit den Phosphorsäureestern der allgemeinen Formel (VI),

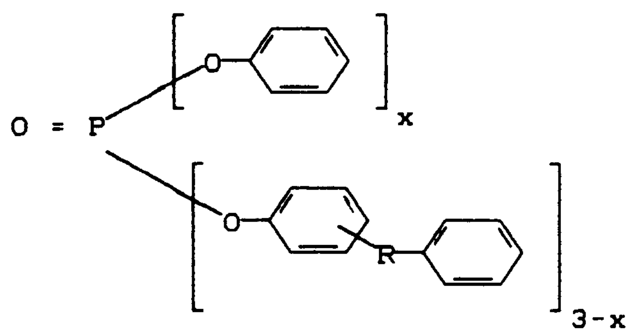

(VI)

worin

R eine direkte Bindung, eine $-CH_2-$,

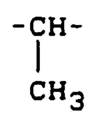 oder

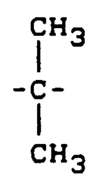

Gruppe ist,

x gleich 0, 1 oder 2 ist und die aromatischen Bereiche auch Alkyl-substituiert sein können (siehe hierzu deutsche Patentanmeldung DE-A-38 24 356).

Aus Gründen der Herstellung ist aus dieser Patentanmeldung als Komponente für Mischungen speziell der Phosphorsäure-phenyl-bis-((1-phenylethyl)-phenyl)-ester bevorzugt.

Ferner kommt als weitere Komponente für Mischungen der Phosphorsäure-(2,4,6-tri-(1-phenylethyl)-phenyl)-bis-phenylester in Frage.

Verwendet werden können die erfindungsgemäß geeigneten Phosphorsäureester der Formel (I) auch in Mischung mit Polyphosphorsäureestern von Novolaken (US-A-4 105 825). Diese Mischungen können auch die erfindungsgemäß geeigneten Phosphorsäureester der deutschen Patentanmeldung DE-A-38 24 356 sowie den Phosphorsäure-(2,4,6-tri-(1-phenylethyl)-phenyl)-bis-phenylester enthalten.

Gegenstand der vorliegenden Erfindung sind somit auch die erfindungsgemäßen Formmassen, die dadurch gekennzeichnet sind, daß sie außer den Phosphorverbindungen der Formel (I) noch zusätzlich solche der Formel (VI) und/oder zusätzlich Phosphorsäure-(2,4,6-tri-(1-phenyl-ethyl)-phenyl)-bis-phenylester

und/oder zusätzlich Polyphosphorsäureester von Novolaken enthalten.

Die Menge an diesen anderen Phosphorsäureestern als denen der Formel (I) können bezüglich der Phosphorsäureester der DE-A-38 24 356 0 bis 90 Gew.-%, des Phosphorsäure-(2,4,6-tri-(1-phenylethyl)-phenyl)-bis-phenylesters 0 bis 65 Gew.-% und der Phosphorester von Novolaken 0 bis 80 Gew.-% der jeweiligen Phosphorsäureesterverbindung ausmachen.

Die erfindungsgemäß geeigneten Tetrafluorethylenpolymerisate gemäß Komponente E) sind Polymere mit Fluorgehalten von 65 bis 76 Gew.-%, vorzugsweise 70 bis 76 Gew.-%. Beispiele sind u.a. Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer. Derartige Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat, bei Drücken von 7 bis 71 $kg/cm^2$ und bei Temperaturen von 0 bis 200 °C, vorzugsweise bei Temperaturen von 20 bis 100 °C (nähere Einzelheiten siehe beispielsweise US-A-2 393 967).

Die erfindungsgemäß geeigneten Silikonharze F) weisen die Summenformel (VII) auf,

$$R_xSi(OR')_yO_{\frac{4-x-y}{2}} \qquad (VII)$$

worin

- R für einen einwertigen Kohlenwasserstoffrest steht, der gegebenenfalls selbst substituiert sein kann, insbesondere aber eine Methylgruppe und/oder Phenylgruppe bedeutet, worin R' eine Alkylgruppe oder ein Wasserstoffrest ist,
- x einen Wert von 0,75 bis 1,75 und
- y einen Wert von 0,0001 bis 0,5 besitzen

und worin das Silikonharz aufgebaut ist aus Einheiten der Formel $SiO_{4/2}$, $RSiO_{3/2}$, $R_2SiO_{2/2}$ und/oder $R_3SiO_{1/2}$.

Bevorzugte Silikonharze F) der Formel (VII) sind solche, in denen mindestens 80 Gew.-% aller Reste R Methyl- und Phenylgruppen sind. Nähere Einzelheiten zu den Silikonharzen F) sind in DE-A-38 15 124 beschrieben.

Durch den Zusatz von Tetrafluorethylenpolymerisaten oder Silikonharzen wird insbesondere das Abtropfen der Formmassenschmelze während des Brandvorganges reduziert oder ganz verhindert.

Stellt man nun die erfindungsgemäßen Formmassen beispielsweise durch Schmelzcompoundierung in Knetern oder Extrudern aus den Komponenten A), B), D), gegebenenfalls C) sowie einem Polytetrafluorethylen-Pulver E) oder einem Silikonharz F) her, so werden zwar Formmassen hoher Flammwidrigkeit erhalten; Formkörper daraus haben aber manchmal eine mangelhafte Oberfläche, beispielsweise Mikrorisse oder Schlieren.

Das wird mit Sicherheit vermieden, wenn sehr feinteilige und zudem ungesinterte Tetrafluorethylenpolymerisate in Form einer koagulierten Mischung von Emulsionen der Tetrafluorethylenpolymerisate E) mit Emulsionen der Pfropfpolymerisate C) eingesetzt werden, und/oder Emulsionen oder Dispersionen der Pfropfpolymerisate C) mit Emulsionen der Silikonharze F) eingesetzt werden.

Zur Herstellung einer entsprechenden Mischung mit Tetrafluorethylenpolymerisat wird zuerst eine wäßrige Emulsion (Latex) eines Pfropfpolymerisates C) mit mittleren Latexteilchengrößen von 0,05 bis 30,0 µm, insbesondere 0,02 bis 5,0 µm, ganz besonders von 0,2 bis 0,6 µm, mit einer feinteiligen Emulsion eines Tetrafluorethylenpolymerisates E) in Wasser mit mittleren Teilchengrößen von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die einzusetzenden Emulsionen der Pfropfpolymerisate C) besitzen Feststoffgehalte von 20 bis 60 Gew.-%, insbesondere von 30 bis 45 Gew.-%.

In der Emulsionsmischung liegt das Gewichtsverhältnis Pfropfpolymerisat C) zum Tetrafluorethylenpolymerisat E) zwischen 95:5 und 60:40. Anschließend wird die Emulsionsmischung in bekannter Weise koaguliert, beispielsweise durch Sprühtrocknung, Gefriertrocknung oder Koagulation mittels Zusatz von anorganischen oder organischen Salzen, Säuren, Basen oder organischen, mit Wasser mischbaren Lösungsmitteln, wie Alkoholen, Ketonen, vorzugsweise bei Temperaturen von 20 bis 150 °C, insbesondere von 50 bis 100 °C. Falls erforderlich, kann bei 50 bis 200 °C, bevorzugt 70 bis 100 °C, getrocknet werden.

Geeignete Tetrafluorethylenpolymerisat-Emulsionen sind handelsübliche Produkte und werden beispielsweise von der Firma DuPont als Teflon® 30 N angeboten.

Die Herstellung der pulverförmigen Polymermischungen aus Silikonharz F) und Pfropfpolymerisat C) (gemäß DE-A-38 15 124) erfolgt dadurch, daß man

I. eine Dispersion eines organischen, thermoplastischen Polymerisats C) mit einem mittleren Teilchendurchmesser ($d_{50}$) von 0,05 bis 30,0 µm, vorzugsweise von 0,05 bis 5,0 µm, ganz besonders von 0,2 bis 0,6 µm, und mit einem Feststoffgehalt von 20 Gew.-% bis 60 Gew.-%, bezogen auf Gewicht Dispersion der Komponente C), mit einer Emulsion eines Silikonharzes F) der Formel (VII) mit einem mittleren Teilchendurchmesser ($d_{50}$) von 0,05 bis 3 µm, vorzugsweise von 0,1 bis 1 µm, und mit einem Feststoffgehalt bis zu 60 Gew.-%, vorzugsweise von 30 Gew.-% bis 50 Gew.-%, bezogen auf Gewicht Emulsion der Komponente F), so innig und in solchen Mengenverhältnissen vermischt, daß praktisch keine Agglomeration der Teilchen stattfindet, und daß Mischungen von 0,1 Gew.-% bis 50 Gew.-%, vorzugsweise mit 5 Gew.-% bis 40 Gew.-% und insbesondere mit 8 Gew.-% bis 20 Gew.-% Silikonharz F) mit 99,9 Gew.-% bis 50 Gew.-%, vorzugsweise 95 Gew.-% bis 60 Gew.-% und insbesondere 92 Gew.-% bis 80 Gew.-% thermoplastischem Polymerisat C), bezogen auf Gesamtsumme aus Silikonharz F) und thermoplastischem Polymerisat C), vorliegen,

II. die so erhaltene Mischung bei 20 °C bis 120 °C und pH-Werten von 7 bis 2, vorzugsweise von 5 bis 3, unter Bildung einer feinteiligen Mischung der Komponenten C) und F) in bekannter Weise koaguliert und

III. nach Isolierung dieses Koagulats bei Temperaturen von 50 °C bis 150 °C, insbesondere von 80 °C bis 120 °C, in bekannter Weise trocknet.

Da der Einsatz der erfindungsgemäß zu verwendenden Pfropfpolymerisate C) durch Vorabmischung ihrer Emulsionen mit Emulsionen der Komponente E) erfolgt, ist die Herstellung der Komponente C) nach dem Verfahren der Emulsionspolymerisation am zweckmäßigsten. Das eingesetzte Verhältnis von Polytetrafluorethylen E) und Pfropfpolymerisat C) ist so zu wählen, daß der Gesamtgehalt an E) in der Mischung aus A), B) und C) zwischen 0,05 und 5,0 Gewichtsteilen, bevorzugt zwischen 0,1 und 1,0 Gewichtsteilen, liegt. Das entsprechende Verhältnis von Silikonharz F) zu Pfropfpolymerisat C) ist so zu wählen, daß der Gesamtgehalt an Silikonharz F) in der Mischung aus A), B) und C) zwischen 0,05 und 10,0 Gewichtsteilen, bevorzugt zwischen 0,2 und 3,0 Gewichtsteilen, liegt.

Die erfindungsgemäßen thermoplastischen Formmassen können weitere Thermoplasten wie Polyalkylencarbonsäureester, Polysulfone, Polyethersulfone, Polyketone, Polyetherketone, Polyphenylenether, Polyarylensulfide sowie weitere Zuätze wie Stabilisatoren, Pigmente, Fließmittel, Entformungsmittel, Antistatika und/oder andere Flammschutzadditive wie Metall- oder Halogen-Verbindungen enthalten.

Gegenstand der vorliegenden Erfindung sind somit auch Polycarbonatformmassen, enthaltend die Komponenten A), B), D) und gegebenenfalls die Komponenten C) und/oder E) und/oder F) und/oder gegebenenfalls thermoplastische Polyalkylencarbonsäureester, thermoplastische Polysulfone, thermoplastische Polyethersulfone, thermoplastische Polyketone, thermoplastische Polyetherketone, thermoplastische Polyphenylenether, thermoplastische Polyarylensulfide, Stabilisatoren, Pigmente, Fließmittel, Entformungsmittel, Antistatika und/oder andere Flammschutzmittel.

Die erfindungsgemäßen thermoplastischen Formmassen, enthaltend die Komponenten A), B), D) und gegebebenfalls die Komponenten C) und/oder E) und/oder F) und/oder gegebenenfalls thermoplastische Polyalkylencarbonsäureester, thermoplastische Polysulfone, thermoplastische Polyethersulfone, thermoplastische Polyketone, thermoplastische Polyetherketone, thermoplastische Polyphenylenether, thermoplastische Polyarylensulfide, Stabilisatoren, Pigmente, Fließmittel, Entformungsmittel, Antistatika und/oder andere Flammschutzmittel werden hergestellt, indem man die jeweiligen Bestandteile in bekannter Weise vermischt und bei Temperaturen von 200 bis 330 °C in üblichen Aggregaten wie Innenknetern, Extrudern oder Doppelwellenschnecken schmelzcompoundiert oder schmelzextrudiert, oder indem man die Lösungen der jeweiligen der vorstehend genannten Bestandteile in geeigneten organischen Lösungsmitteln, beispielsweise in Chlorbenzol, mischt und die Lösungsgemische in üblichen Aggregaten, beispielsweise in Eindampfextrudern, eindampft.

Die Vermischung der einzelnen Bestandteile kann in bekannter Weise sowohl sukzessiv als auch simultan erfolgen, und zwar sowohl bei etwa 20 °C (Raumtemperatur) als auch bei höherer Temperatur.

Gegenstand der vorliegenden Erfindung ist somit auch ein Verfahren zur Herstellung von thermoplastischen Polycarbonatfommassen, enthaltend die Komponenten A), B), D) und gegebenenfalls die Komponenten C) und/oder E) und/oder F) und/oder gegebenenfalls thermoplastische Polyalkylencarbonsäureester, thermoplastische Polysulfone, thermoplastische Polyethersulfone, thermoplastische Polyketone, thermoplastische Polyetherketone, thermoplastische Polyphenylenether, thermoplastische Polyarylensulfide, Stabilisatoren, Pigmente, Fließmittel, Entformungsmittel, Antistatika und/oder andere Flammschutzmittel, das dadurch gekennzeichnet ist, daß man die jeweiligen der vorstehend genannten Bestandteile in bekannter

Weise vermischt und danach bei Temperaturen von 200 °C bis 330 °C in üblichen Aggregaten schmelzkompoundiert oder schmelzextrudiert, oder daß man die Lösungen der jeweiligen der vorstehend genannten Bestandteile in geeigneten organischen Lösungsmitteln mischt und die Lösungsgemische in üblichen Aggregaten eindampft.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte wie Saftpressen, Kaffeemaschinen, Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften besitzen.

Eine weitere Form der Verarbeitung ist die Herstellung von Formkörpern durch Tiefziehen oder Warmverformen zuvor durch Extrusion hergestellter Platten oder Folien.

Teilchengröße bedeutet immer mittlerer Teilchendurchmesser $d_{50}$, ermittelt durch Ultrazentrifugenmessungen nach W. Scholtan et al., Kolloid-Z. u. Z. Polymere 250 (1972) S. 782 bis 796.

## Beispiel 1

Herstellung von Phosphorsäure-2,4-di-(1-phenylethyl)-phenyl-bis-phenyl-ester

Zur Herstellung von 2,4-Di-(1-phenylethyl)-phenol werden in einem mit Rührer, Thermometer, Tropftrichter, Rückflußkühler und Einleitungsrohr für Stickstoff versehenen 6 1-Kolben, der durch eine Pilzheizhaube mit Temperaturregelung beheizt wird, 1129,4 g Phenol (12 Mol) und 11,3 g konzentrierte Schwefelsäure (nach Aufschmelzen des Phenols) vorgelegt und auf 100 °C erwärmt. In 8 Stunden werden 2749,6 g Styrol (24 Mol mit 10 % Überschuß) zugetropft. Die Temperatur steigt dabei auf 125 °C an, Zunächst wird eine Stunde bei dieser, dann 5 Stunden bei 150 °C nachreagiert. Nach Abkühlen auf ca. 80 °C werden zur Neutralisation der Schwefelsäure 4,8 g Magnesiumoxid zugesetzt und in 1 Stunde zur Reaktion gebracht.

Die Abtrennung des Hauptprodukts von Vorlauf und Rückstand erfolgt in einer Vakuumdestillation über eine Vigreux-Kolonne.

Bei einem Druck von 3 mbar und einer Sumpftemperatur auf 200 °C steigend wird bei einer Siedetemperatur von maximal 150 °C der Vorlauf abgetrennt. Die Menge beträgt 312,1 g. Es handelt sich vorwiegend um 1-Phenylethyl-phenol (OH-Zahl 270; $n_D^{20}$ 1,5936).

Die Destillation des 2,4-Di-(1-phenylethyl)-phenols wird bei einem Druck von 3 mbar und einer Sumpftemperatur von 210 bis 250 °C durchgeführt. Die Siedetemperatur ist 170 bis 240 °C. Es werden 3169,2 g Produkt erhalten (OH-Zahl 174, theoretisch 185; $n_D^{20}$ 1,6039). Die Ausbeute beträgt 87,3 %, bezogen auf eingesetztes Phenol.

Der Rückstand der Destillation in einer Menge von 218,5 g enthält neben den anorganischen Bestandteilen 2,4,6-Tri-(1-phenylethyl)-phenol. Der Rückstand wurde verworfen.

Zur Herstellung von Phosphorsäure-2,4-di-(1-phenyl-ethyl)-phenyl-bis-phenyl-ester werden in einem mit Kapillare, Vigreux-Kolonne mit absteigendem Kühler und Thermometer versehenen 6 l-Kolben, der durch eine Pilzheizhaube mit Temperaturregler beheizt wird, 1934,8 g 2,4-Di-(1-phenylethyl)-phenol (6 Mol nach OH-Zahl 174), 1957,8 g Triphenylphosphat (6 Mol) und 10,1 g Natriumphenolat (0,09 Mol) auf 150 °C erwärmt. Dann wird der Druck langsam auf 300 mbar zurückgenommen und auf 200 °C erwärmt. Ein über die Kapillare eintretender Stickstoffstrom durchmischt den Kolbeninhalt. Nach ca. einer Stunde wird bei 200 °C der Druck weiter auf 4 mbar zurückgenommen und in ca. 4 Stunden der größte Teil des sich abspaltenden Phenols abdestilliert. Danach wird in drei weiteren Stunden bei auf ca. 250 °C steigender Temperatur und bei auf 5 mbar abfallendem Druck das Reaktionsgemisch ausgeheizt.

Als Destillat liegen 554,4 g kristallisiertes Produkt mit der OH-Zahl 589 vor, Es enthält 547,7 g Phenol (6 Mol Phenol: 567,7 g).

Der Rückstand im Kolben wird in Methylenchlorid aufgenommen und mit Wasser mehrmals gewaschen. Die Methylenchloridlösung wird dann getrocknet und eingeengt. Der harzige Rückstand beträgt 3089,9 g, die einer Ausbeute von 96,3 % entsprechen. Die OH-Zahl beträgt 0, der Phosphorgehalt 5,5 % (theoretisch 5,8 %). Das Produkt liegt praktisch vorwiegend als Phosphorsäure-2,4-di-(2-phenylethyl)-phenyl-bis-phenylester vor.

Statt 2,4-Di-(1-phenylethyl)-phenol können z.B. auch 2,4-Di-benzyl-phenyl und 2,4-Di-(1-methyl-1-phenylethyl)-phenol eingesetzt werden.

In dynamischen TGA-Messungen (Aufheizrate 10 °C/Min.) wurde ermittelt, daß bei 290 °C die gesamte flüchtige Menge des obigen erfindungsgemäßen Phosphats gegenüber Triphenylphosphat mit 100 % Gewichtsverlust ca. 6 Gew.-% beträgt.

Beispiel 2

Herstellung eines Gemischs von Phosphorsäure-2,4-di-(1-phenylethyl)-phenyl-bis-phenyl-ester und Phosphorsäurephenyl-bis-[(1-phenylethyl)-phenyl]-ester

Zur Herstellung von 2,4-Di-(1-phenylethyl)-phenol und (1-Phenylethyl)-phenol werden in einem mit Rührer, Thermometer, Tropftrichter, Rückflußkühler und Einleitungsrohr für Stickstoff versehenen 6 l-Kolben, der durch eine Pilzheizhaube mit Temperaturregelung beheizt wird, 2823,4 g Phenol (30 Mol) und 100,0 g saurer Ionenaustauscher (Lewatit SPC 108 der Bayer AG, gequollen im Reaktionsgemisch eines zuvor hergestellten Ansatzes) vorgelegt und auf 55 °C erwärmt. In 5 Stunden werden 2083,0 g Styrol (20 Mol) zugetropft. Die Temperatur steigt dabei auf 85 °C an. Zunächst wird eine Stunde bei dieser, dann 2,5 Stunden bei 70 °C nachreagiert. Anschließend wird der Ionenaustauscher abfiltriert.

Die Abtrennung des überschüssigen Phenols erfolgt in einer Vakuumdestillation über eine Vigreux-Kolonne. Bei einem Druck von 3 mbar und einer Sumpftemperatur auf 200 °C steigend gehen bei einer Siedetemperatur von maximal 160 °C 1273,0 g Phenol (13,5 Mol) über. Der Rückstand (3552,4 g, OH-Zahl 255) stellt das zur Umwandlung in den Phosphorsäureester vorgesehene Produkt dar. Eine Vakuumdestillation nach Beispiel 1 ergibt, daß er aus 2723,5 g (1-Phenylethyl)-phenol (13,7 Mol, OH-Zahl 280, theoretisch 283), 772,7 g 2,4-Di-(1-phenylethyl)-phenol (2,6 Mol, OH-Zahl 184, theoretisch 186) und 47,6 g 2,4,6-Tri-(1-phenylethyl)-phenol (0,1 Mol, OH-Zahl 146, theoretisch 138) besteht.

Zur Herstellung der Phosphorsäureester aus obigem Phenolgemisch werden in einem mit Kapillare, Vigreux-Kolonne mit Destillationsbrücke und Thermometer versehenen 6 l-Kolben, der durch eine Pilzheizhaube mit Temperaturregelung beheizt wird, 2589,7 g Phenolgemisch (1988,0 g (10,0 Mol) (1-Phenylethyl)-, 573,9 g (1,9 Mol) 2,4-Di-(1-phenylethyl)- und 29,7 g (0,07 Mol) 2,4,6-Tri-(1-phenylethyl)-phenol), 2284,1 g Triphenylphosphat (7 Mol) und 20,0 g Magnesiumchlorid (0,2 Mol) auf 150 °C erwärmt. Dann wird der Druck langsam auf 300 mbar zurückgenommen und auf 200 °C erwärmt. Ein über die Kapillare eintretender Stickstoffstrom durchmischt den Kolbeninhalt. Nach ca. einer Stunde wird bei 200 °C der Druck weiter auf 4 mbar zurückgenommen und in ca. 6 Stunden der größte Teil des sich abspaltenden Phenols abdestilliert. Danach wird in zwei weiteren Stunden bei auf ca. 250 °C steigender Temperatur und bei auf 3 mbar abfallendem Druck das Reaktionsgemisch ausgeheizt.

Als Destillat liegen 1112,8 g kristallisiertes Produkt mit der OH-Zahl 582 vor. Es enthält 1086,3 g Phenol (12,0 Mol Phenol: 1129,4 g).

Der Rückstand im Kolben wird in Methylenchlorid aufgenommen und mit Wasser mehrmals gewaschen. Die Methylenchloridlösung wird dann getrocknet und eingeengt. Der harzige Rückstand beträgt 3649,4 g, die einer Ausbeute von 97,0 % entsprechen. Die OH-Zahl beträgt 0, der Phosphorgehalt 5,4 % (theoretisch 5,8 %). Das Produkt liegt als obige Mischung vor. Es enthält außerdem kleine Mengen Phosphorsäure-2,4,6-tri-(1-phenylethyl)-phenyl-bis-phenyl-ester und Triphenylphosphat. Letzteres in einer Menge von 2,2 Gew.-%.

In dynamischen TGA-Messungen (Aufheizrate 10 °/Min.) wurde ermittelt, daß bei 290 °C die gesamte flüchtige Menge des obigen erfindungsgemäßen Phosphats gegenüber Triphenylphosphat mit 100 % Gewichtsverlust ca. 6 Gew.-% beträgt.

Beispiel 3

Verwendete Materialien

I. Aromatisches Polycarbonat aus 10 Gew.-% Tetrabrombisphenol A und 90 Gew.-% Bisphenol A mit relativer Viskosität, gemessen in Methylenchlorid bei 25 °C, von 1,284 (0,5 gew.-%ige Lösung).

II. Aromatisches Polycarbonat aus 100 Gew.-% Bisphenol A mit relativer Viskosität, gemessen in Methylenchlorid bei 25 °C, von 1,284 (0,5 gew.-%ige Lösung).

III. Aromatisches oligomeres Carbonat aus 100 Gew.-% Tetrabrombisphenol A, Great Lakes BC-52-HP der Firma Great Lakes Chem. Corp., USA.

IV. Thermoplastisches Polymerisat aus Styrol und Acrylnitril mit einem Acrylnitrilgehalt von 29 Gew.-% und einem mittleren Molekulargewicht von 60.000.

V. ABS-Pfropfpolymerisat von 50 Gew.-% Styrol-Acrylnitrilgemisch (im Verhältnis 72:28) auf 50 Gew.-% teilchenförmigem Polybutadien eines mittleren Teilchendurchmessers ($d_{50}$) von 0,4 µm, erhalten durch Emulsionspolymerisation.

VI. 10 Gew.-% Polytetrafluorethylen enthaltendes Polymerisat nach V., dadurch hergestellt, daß das ABS-Pfropfpolymerisat als Latex und das Polytetrafluorethylen als Dispersion gemischt, koaguliert und

als Cofällung gemeinsam aufgearbeitet werden.

VII. 10 Gew.-% Silikonharz enthaltendes Polymerisat nach V., dadurch hergestellt, daß das Pfropfpolymerisat als Latex und das Silikonharz als Emulsion gemischt, koaguliert und als Cofällung gemeinsam aufgearbeitet werden.

VIII. Phosphorsäure-2,4-di-(1-phenylethyl)-phenyl-bis-phenyl-ester nach Beispiel 1.

IX. Phosphorsäure-phenyl-bis-((1-phenylethyl)-phenyl)-ester nach Beispiel 1 der DE-A-38 24 356.3.

X. Gemischte Phosphorsäureester nach Beispiel 2.

XI. Pentaerythrittetrastearat.

Herstellung und Prüfung der Formmassen:

Auf einem Banbury-Innenkneter (Fa. Pomini-Farrel) vom Typ BR (1,2 l) oder Typ OOC (3 l) werden die Bestandteile bei 230 bis 240 °C in den in Tabelle 1 angegebenen Mengen (Angaben in Gewichtsteilen) gemischt und zu Granulat aufgearbeitet.

Tabelle 1: Eingesetzte Komponenten (Angaben in Gew.-%)

| Komponente | I. | II. | III. | IV. | V. | VI. | VII. | VIII. | IX. | X. | XI. |
|---|---|---|---|---|---|---|---|---|---|---|---|
| Beispiel 3.1 | 65,0 | | | 9,7 | 10,0 | 2,3 | | 12,5 | | | 0,5 |
| Beispiel 3.2 | 65,0 | | | 12,5 | 8,0 | 4,0 | | | | 10,0 | 0,5 |
| Beispiel 3.3 | 65,0 | | | 10,5 | 2,0 | | 10,0 | | | 12,0 | 0,5 |
| Beispiel 3.4 | | 60,0 | 6,0 | 11,5 | 6,0 | 4,0 | | | | 12,0 | 0,5 |
| Beispiel 3.5 | | 65,0 | 8,0 | 6,5 | | | 10,0 | | | 10,0 | 0,5 |
| Beispiel 3.6 | | 65,0 | | 10,5 | 4,0 | 4,0 | | 6,0 | 10,0 | | 0,5 |
| Beispiel 3.7 | | 65,0 | | 10,5 | 4,0 | 4,0 | | | | 16,0 | 0,5 |

Die Formmassen werden bei 260 °C zu Prüfkörpern spritzgegossen (Aggregat: Werner Pfleiderer Schnecke DKS 275, Schließkraft 275 MP, Schneckendurchmesser 56 mm, Länge L/D-23/1) und folgenden Tests unterzogen:

- Schlagzähigkeit nach DIN 43 543 ($a_n$)
- Kerbschlagzähigkeit nach DIN 53 543 ($a_k$)

- Wärmeformbeständigkeit nach DIN 53 460 (Vicat B)
- Brandtest nach Vorschrift Underwriter Laboratories (UL 94)

Tabelle 2 zeigt die erhaltenen Prüfdaten.

Tabelle 2

| Prüfdaten | | | | |
|---|---|---|---|---|
| | $a_n$ kJ/m² | $a_k$ kJ/m² | Vicat B °C | UL 94 1,6 mm-Stab |
| Beispiel 3.1 | n.g.* | 6 | 98 | V-O |
| Beispiel 3.2 | n.g. | 12 | 102 | V-O |
| Beispiel 3.3 | n.g. | 15 | 99 | V-O |
| Beispiel 3.4 | n.g. | 7 | 99 | V-O |
| Beispiel 3.5 | n.g. | 12 | 105 | V-O |
| Beispiel 3.6 | n.g. | 5 | 89 | V-O |
| Beispiel 3.7 | n.g. | 5 | 87 | V-O |

* nicht gebrochen.

Aus den Tabellen 1 und 2 des Beispiels 3 geht hervor, daß erfindungsgemäßes Phosphat allein und in Mischung mit anderem schwer flüchtigem Phosphat, ganz speziell in Mischung mit Phosphorsäure-phenyl-bis-((1-phenyl-ethyl)-phenyl)-ester, Blends aus Polycarbonat und ABS-Komponenten in Gegenwart üblicher Mengen Polytetrafluorethylen oder Silikonharz einen Flammschutz geben, der die Beurteilung V-O bei 1,6 mm dicken Prüfkörpern nach UL 94 zukommt.

**Patentansprüche**

**1.** Thermoplastische Polycarbonatformmassen, enthaltend

A) 40 bis 90 Gewichtsteile eines thermoplastischen aromatischen Polycarbonats,

B) 10 bis 50 Gewichtsteile eines thermoplastischen Copolymerisats aus 50 bis 95 Gew.-% Styrol, α-Methylstyrol, kernalkyliertem Styrol, Halogenstyrol oder Mischungen daraus und 5 bis 50 Gew.-% Acrylnitril, Methacrylnitril, Alkylacrylat, Alkylmethacrylat, Maleinsäureanhydrid, N-substituiertem Maleinimid, Vinylacetat oder Mischungen daraus,

C) 0 bis 25 Gewichtsteile Pfropfpolymerisat, hergestellt aus

C.1) 5 bis 90 Gewichtsteilen einer Mischung aus:

C.1.1) 50 bis 95 Gew.-% Styrol, α-Methylstyrol, Halogenstyrol, kernalkyliertem Styrol, Methylmethacrylat oder Mischungen daraus und

C.1.2) 5 bis 50 Gew.-% (Meth)Acrylnitril, Methylmethacrylat, Maleinsäureanhydrid, N-substituiertem Maleinimid oder Mischungen daraus, auf

C.2) 10 bis 95 Gewichtsteilen eines Kautschuks mit einer Glastemperatur TG ≦ 10 °C,

D) 1 bis 25 Gewichtsteile, bezogen jeweils auf 100 Gewichtsteile der Gewichtssumme aus A), B) und gegebenenfalls C), einer Phosphorverbindung,

E) 0 bis 5 Gewichtsteile, bezogen auf 100 Gewichtsteile der Gewichtssumme aus A), B) und gegebenenfalls C) eines Tetrafluorethylenpolymerisats mit mittleren Teilchengrößen von 0,05 bis 20 µm und einer Dichte von 1,2 bis 1,9 g/cm³,

F) 0 bis 10 Gewichtsteile, bezogen jeweils auf 100 Gewichtsteile der Gewichtssumme aus A), B) und gegebenenfalls C) eines Silikonharzes, der Summenformel (VII),

$$R_xSi(OR')_yO_{\frac{4-x-y}{2}} \qquad (VII)$$

worin

R für einen einwertigen Kohlenwasserstoffrest steht, der gegebenenfalls selbst substituiert sein kann,

R' eine Alkylgruppe oder ein Wasserstoffrest ist,

x einen Wert von 0,75 bis 1,75 und

y einen Wert von 0,0001 bis 0,5 besitzen

und worin das Silikonharz aufgebaut ist aus Einheiten der Formel
$SiO_{4/2}$, $RSiO_{3/2}$, $R_2SiO_{2/2}$ und/oder $R_3SiO_{1/2}$, wobei mindestens E) oder F) in Mengen von 0,05 Gewichtsteilen, pro 100 Gewichtsteile A), B) und gegebenenfalls C), vorliegen
dadurch gekennzeichnet, daß sie als Phosphorverbindungen D) solche der Formel (I) enthalten,

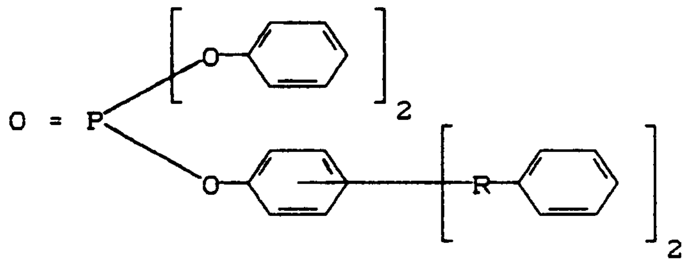

(I)

worin

R eine $-CH_2-$,

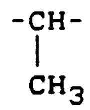 oder 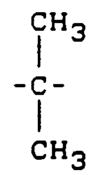

Gruppe ist und die aromatischen Bereiche auch Alkyl-substituiert sein können.

2. Formmassen gemäß Anspruch 1, dadurch gekennzeichnet, daß die Komponente D) in Mengen von 2 bis 20 Gewichtsteilen vorliegt.

3. Formmassen gemäß Anspruch 1, dadurch gekennzeichnet, daß die Formmassen zusätzlich Phosphorsäureester der Formel (VI),

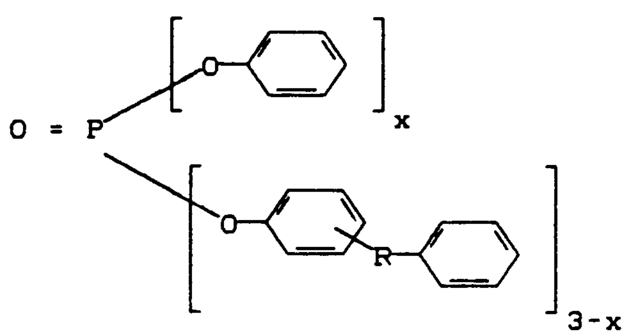

(VI)

enthalten, worin

R eine direkte Bindung, eine $-CH_2-$,

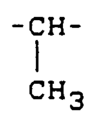 oder

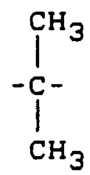

Gruppe ist,

x gleich 0, 1 oder 2 ist und die aromatischen Bereiche auch Alkyl-substituiert sein können, und/oder zusätzlich den Phosphorsäure-(2,4,6-tri-(1-phenylethyl)-phenyl)-bis-phenylester und/oder zusätzlich Polyphosphorsäureester von Novolaken enthalten.

**4.** Thermoplastische Polycarbonatformmassen gemäß Anspruch 1, dadurch gekennzeichnet, daß die Komponente A) ein thermoplastisches Polycarbonat auf Basis der Diphenole der Formel (IV)

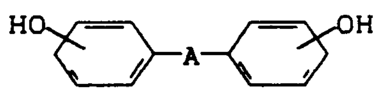

(IV)

und gegebenenfalls der Formel (IVa)

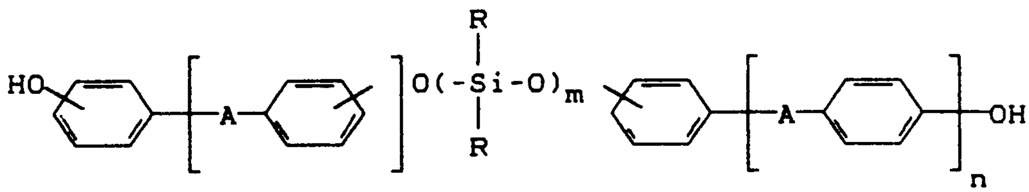

(IVa)

ist, worin

A eine Einfachbindung, $C_1$-$C_5$-Alkylen, ein $C_2$-$C_5$-Alkyliden, ein $C_5$-$C_6$-Cycloalkyliden, das noch durch Methylgruppen substituiert sein kann, -O-, -S-oder $SO_2$-, die aromatischen Bereiche durch Halogenatome substituiert sein können,

n 1 oder null ist,

R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und

m eine Zahl zwischen 5 und 100, vorzugsweise zwischen 20 und 80 ist,

und wobei der Gewichtsanteil an Diphenolen der Formel (IVa) in den Copolycarbonaten jeweils so bemessen ist, daß der Gehalt an Diorganosiloxy-Einheiten (V)

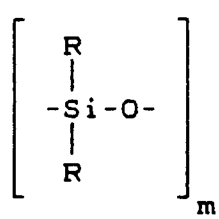

(V)

in Polycarbonat A) zwischen 1 und 25 Gew.-% beträgt.

**5.** Polycarbonatformmassen gemäß Anspruch 1, dadurch gekennzeichnet, daß die Komponente A) ein Gemisch aus siloxanhaltigen Polycarbonaten und siloxanfreien Polycarbonaten ist.

**6.** Formmassen gemäß Anspruch 1, dadurch gekennzeichnet, daß C) aus

C.1) 30 bis 80 Gewichtsteilen einer Mischung C.1.1) und C.1.2) und
C.2) 20 bis 70 Gewichtsteilen hergestellt ist.

**7.** Formmassen gemäß Anspruch 1, dadurch gekennzeichnet, daß die Komponente E) als koagulierte Mischung von Emulsionen der Tetrafluorethylenpolymerisate E) mit Emulsionen der Pfropfpolymerisate C) eingesetzt wird, worin das Gewichtsverhältnis Pfropfpolymerisat C) zum Tetrafluorethylenpolymerisat E) zwischen 95:5 und 60:40 liegt und der Gehalt an Cofällung von C) und E), bezogen auf 100 Gewichtsteile A), B) und C), zwischen 0,1 und 20,0 Gewichtsteilen liegt.

**8.** Formmassen gemäß Anspruch 1, dadurch gekennzeichnet, daß die Komponente F) als koagulierte Mischung von Emulsionen des Silikonharzes F) mit Emulsionen der Pfropfpolymerisate C) eingesetzt wird, worin das Gewichtsverhältnis Pfropfpolymerisat C) zum Silikonharz F) zwischen 99,9:0,1 und 50:50 liegt und der Gehalt an Copräzipitat von C) und F), bezogen auf 100 Gewichtsteile A), B) und C), zwischen 0,1 und 30,0 Gewichtsteilen liegt.

**9.** Formmassen gemäß Anspruch 1, enthaltend zusätzlich thermoplastische Polyalkylencarbonsäureester, thermoplastische Polysulfone, thermoplastische Polyethersulfone, thermoplastische Polyketone, thermoplastische Polyetherketone, thermoplastische Polyphenylenether, thermoplastische Polyarylensulfide, Stabilisatoren, Pigmente, Fließmittel, Entformungsmittel, Antistatika und/oder andere Flammschutzmittel.

**10.** Verfahren zur Herstellung der Polycarbonatformmassen der Ansprüche 1 bis 9, dadurch gekennzeichnet, daß man die Komponenten A), B), D) und gegebenenfalls die Komponenten C) und/oder E) und/oder F) und/oder gegebenenfalls thermoplastische Polyalkylencarbonsäureester, thermoplastische Polysulfone, thermoplastische Polyethersulfone, thermoplastische Polyketone, thermoplastische Polyetherketone, thermoplastische Polyphenylenether, thermoplastische Polyarylensulfide, Stabilisatoren, Pigmente, Fließmittel, Entformungsmittel, Antistatika und/oder andere Flammschutzmittel in bekannter Weise vermischt und bei Temperaturen von 200 °C bis 330 °C in üblichen Aggregaten schmelzcompoundiert oder schmelzextrudiert, oder daß man Lösungen der genannten Bestandteile mischt und die Lösungsgemische in üblichen Aggregaten eindampft.

## Claims

**1.** Thermoplastic polycarbonate moulding compounds containing
A) 40 to 90 parts by weight of a thermoplastic aromatic polycarbonate,
B) 10 to 50 parts by weight of a thermoplastic copolymer of 50 to 95% by weight styrene, α-methyl styrene, ring-alkylated styrene, halostyrene or mixtures thereof and 5 to 50% by weight acrylonitrile, methacrylonitrile, alkyl acrylate, alkyl methacrylate, maleic anhydride, N-substituted maleic imide, vinyl acetate or mixtures thereof,
C) 0 to 25 parts by weight of a graft polymer produced from
C.1) 5 to 90 parts by weight of a mixture of:
C.1.1) 50 to 95% by weight styrene, α-methyl styrene, halostyrene, ring-alkylated styrene, methyl methacrylate or mixtures thereof and
C.1.2) 5 to 50% by weight (meth)acrylonitrile, methyl methacrylate, maleic anhydride, N-substituted maleic imide or mixtures thereof, on
C.2) 10 to 95 parts by weight of a rubber having a glass temperature TG of ≦10 °C,
D) 1 to 25 parts by weight, based on 100 parts by weight of the total weight of A), B) and optionally C), of a phosphorus compound,
E) 0 to 5 parts by weight, based on 100 parts by weight of the total weight of A), B) and optionally C), of a tetrafluoroethylene polymer having average particle sizes of 0.05 to 20 μm and a density of 1.2 to 1.9 g/cm³,
F) 0 to 10 parts by weight, based on 100 parts by weight of the total weight of A), B) and optionally C), of a silicone resin having the empirical formula (VII):

$$R_xSi(OR')_yO_{\frac{4-x-y}{2}} \qquad (VII)$$

in which

R is a monofunctional hydrocarbon radical, which may optionally be substituted itself,

R' is an alkyl group or a hydrogen atom,

x has a value of 0.75 to 1.75 and

y has a value of 0.0001 to 0.5,

and in which the silicone resin is built up of units corresponding to the formula :

$SiO_{4/2}$, $RSiO_{3/2}$, $R_2SiO_{2/2}$ and/or $R_3SiO_{1/2}$,

characterized in that they contain as the phosphorus compounds D) those corresponding to formula (I):

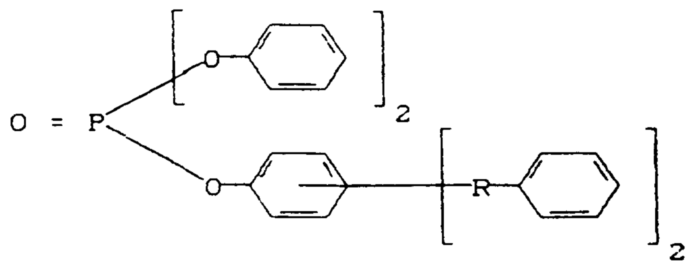

(I)

in which

R is a -CH2-,

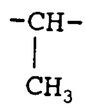

or

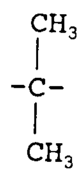

group and the aromatic parts may even be alkyl-substituted.

**2.** Moulding compounds as claimed in claim 1, characterized in that component D) is present in quantities of 2 to 20 parts by weight.

**3.** Moulding compounds as claimed in claim 1, characterized in that the moulding compounds additionally contain phosphoric acid esters corresponding to formula (VI):

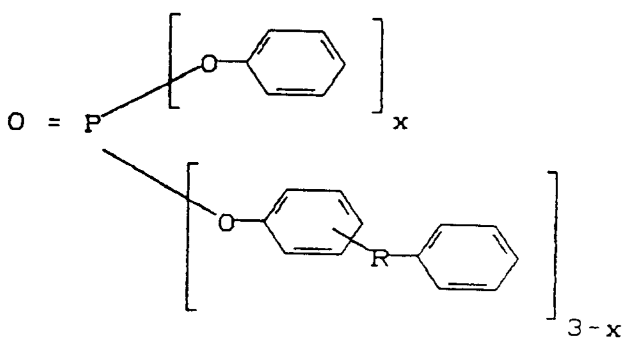

(VI)

in which

R is a direct bond, a $-CH_2-$,

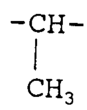

or

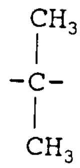

group,

x is 0, 1 or 2 and the aromatic parts may even be alkyl-substituted,

and/or phosphoric acid-(2,4,6-tri-(1-phenylethyl)-phenyl)-bis-phenyl ester and/or polyphosphoric acid esters of novolaks.

**4.** Thermoplastic polycarbonate moulding compounds as claimed in claim 1, characterized in that component A) is a thermoplastic polycarbonate based on diphenols corresponding to formula (IV):

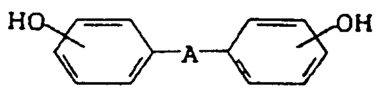

(IV)

and optionally to formula (IVa):

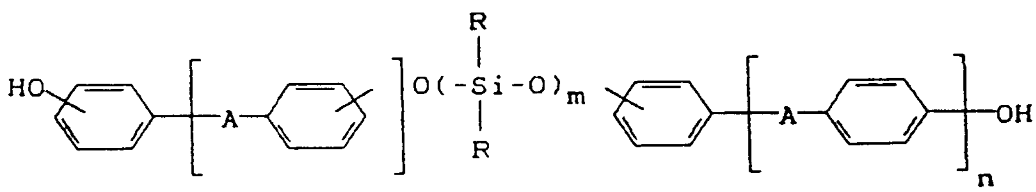

(IVa)

in which

A is a single bond, $C_{1-5}$ alkylene, a $C_{2-5}$ alkylidene, a $C_{5-6}$ cycloalkylidene which may be substituted by methyl groups, -O-, -S- or $-SO_2-$, the aromatic parts may be substituted by halogen atoms,

n is 1 or 0,

the R's may be the same or different and represent a linear $C_{1-20}$ alkyl, branched $C_{3-20}$ alkyl or $C_{6-20}$ aryl, preferably $CH_3$, and

m is a number of 5 to 100 and preferably 20 to 80,

the percentage content by weight of diphenols corresponding to formula (IVa) in the copolycarbonates being gauged so that the content of diorganosiloxy units (V):

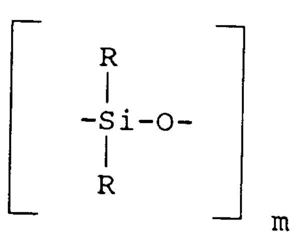

(V)

in polycarbonate A) is from 1 to 25% by weight.

**5.** Polycarbonate moulding compounds as claimed in claim 1, characterized in that component A) is a mixture of siloxane-containing polycarbonates and siloxane-free polycarbonates.

**6.** Moulding compounds as claimed in claim 1, characterized in that C) is prepared from

C.1) 30 to 80 parts by weight of a mixture of C.1.1) and C.1.2) and
C.2) 20 to 70 parts by weight.

**7.** Moulding compounds as claimed in claim 1, characterized in that component E) is used in the form of a coagulated mixture of emulsions of the tetrafluoroethylene polymers E) with emulsions of the graft polymers C), in which the ratio by weight of graft polymer C) to the tetrafluoroethylene polymer E) is from 95:5 to 60:40 and the content of coprecipitate in C) and E), based on 100 parts by weight A), B), C) and D), is from 0.1 to 20.0 parts by weight.

**8.** Moulding compounds as claimed in claim 1, characterized in that component F) is used in the form of a coagulated mixture of emulsions of the silicone resin F) with emulsions of the graft polymers C), in which the ratio by weight of graft polymer C) to silicone resin F) is from 99.9:0.1 to 50:50 and the content of coprecipitate in C) and F), based on 100 parts by weight A), B), D) and C), is from 0.1 to 30.0 parts by weight.

**9.** Moulding compounds as claimed in claim 1 additionally containing thermoplastic polyalkylene carboxylic acid esters, thermoplastic polysulfones, thermoplastic polyether sulfones, thermoplastic polyketones, thermoplastic polyether ketones, thermoplastic polyphenylene ethers, thermoplastic polyarylene sulfides, stabilizers, pigments, flow aids, mould release agents, antistatic agents and/or other flameproofing agents.

**10.** A process for the production of the polycarbonate moulding compounds claimed in claims 1 to 9, characterized in that components A), B), D) and, optionally, components C) and/or E) and/or F) and/or optionally thermoplastic polyalkylene carboxylic acid esters, thermoplastic polysulfones, thermoplastic polyether sulfones, thermoplastic polyketones, thermoplastic polyether ketones, thermoplastic polyphenylene ethers, thermoplastic polyarylene sulfides, stabilizers, pigments, flow aids, mould release agents, antistatic agents and/or other flameproofing agents, characterized in that the respective constituents mentioned above are mixed in known manner and the resulting mixture is melt-compounded or melt-extruded in standard units at temperatures in the range from 200°C to 330°C or in that solutions of the constituents mentioned are mixed and the resulting mixtures are concentrated by evaporation in standard units.

**Revendications**

**1.** Matières à mouler en polycarbonates thermoplastiques contenant
A) 40 à 90 % en poids d'un polycarbonate aromatique thermoplastique,
B) 10 à 50 parties en poids d'un copolymère thermoplastique de 50 à 95 % en poids de styrène, d'α-méthylstyrène, d'un styrène alkylé dans le noyau, d'un halogénostyrène ou leurs mélanges et 5 à 50 % en poids d'acrylonitrile, de méthacrylonitrile, d'un acrylate d'alkyle, d'un méthacrylate d'alkyle, de l'anhydride maléique, d'un maléimide substitué à l'azote, d'acétate de vinyle ou leurs mélanges,
C) 0 à 25 parties en poids d'un polymère greffé préparé à partir de
C.1) 5 à 90 parties en poids d'un mélange de :
C.1.1) 50 à 95 % en poids de styrène, d'α-méthylstyrène, d'un halogénostyrène, d'un styrène alkylé dans le noyau, de méthacrylate de méthyle ou leurs mélanges et
C.1.2) 5 à 50 % en poids de (méth)acrylonitrile, de méthacrylate de méthyle, d'anhydride maléique, d'un maléimide substitué à l'azote ou leurs mélanges, sur
C.2) 10 à 95 parties en poids d'un caoutchouc présentant une température de transition du second ordre inférieure ou égale à 10°C,
D) 1 à 25 parties en poids, pour 100 parties en poids de la somme de A), B) et le cas échéant C), d'un dérivé du phosphore,
E) 0 à 5 parties en poids, pour 100 parties en poids de la somme de A), B) et le cas échéant C), d'un polymère du tétrafluoréthylène à une dimension de particule moyenne de 0,05 à 20 µm et une densité de 1,2 à 1,9 g/cm$^3$,
F) 0 à 10 parties en poids, pour 100 parties en poids de la somme de A), B) et le cas échéant C), d'une résine de silicone de formule globale VII

$$R_xSi(OR')_yO_{\frac{4-x-y}{2}} \qquad (VII)$$

dans laquelle

R représente un radical hydrocarboné monovalent qui peut le cas échéant être lui-même substitué,

R' représente un groupe alkyle ou un atome d'hydrogène,

x est un nombre allant de 0,75 à 1,75 et

y est un nombre allant de 0,0001 à 0,5,

la résine de silicone étant constituée de motifs de formules $SiO_{4/2}$, $RSiO_{3/2}$, $R_2SiO_{2/2}$ et/ou $R_3SiO_{1/2}$, au moins E) ou F) étant présents en quantité de 0,05 partie en poids pour 100 parties en poids de A), B) et éventuellement C), caractérisées en ce qu'elles contiennent en tant que dérivés du phosphore D) des dérivés de formule I

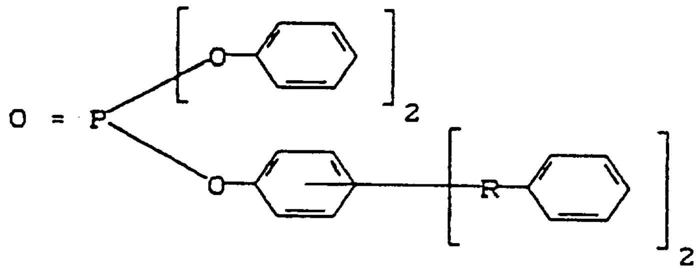
(I)

dans laquelle

R représente un groupe $-CH_2-$, et

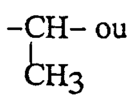 ou 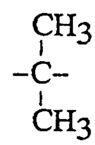

et les motifs aromatiques peuvent également porter des substituants alkyle.

2. Matières à mouler selon revendication 1, caractérisées en ce que le composant D) est présent en quantité de 2 à 20 parties en poids.

3. Matières à mouler selon revendication 1, caractérisées en ce qu'elles contiennent en outre des esters phosphoriques de formule VI

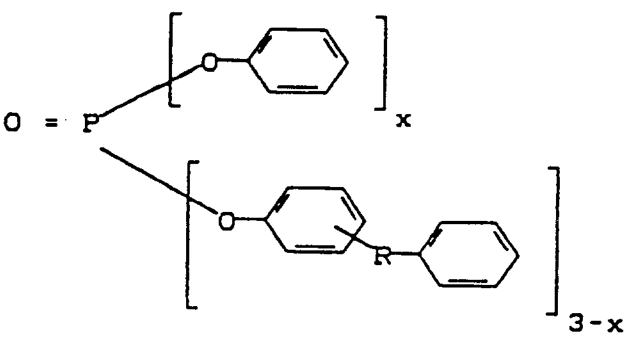
(VI)

dans laquelle

R représente une liaison directe, un groupe $-CH_2-$,

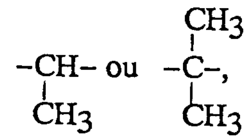

x est égal à 0, 1 ou 2 et les motifs aromatiques peuvent également porter des substituants alkyle, et/ou en outre, le phosphate de 2,4,6-tri-(1-phényléthyl)-phényle et de bis-phényle et/ou en outre des esters polyphosphoriques de novolaques.

**4.** Matières à mouler thermoplastiques en polycarbonates selon revendication 1, caractérisées en ce que le composant A) est un polycarbonate thermoplastique à base de diphénols de formule IV

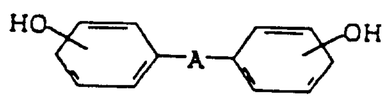

(IV)

et éventuellement de formule IVa)

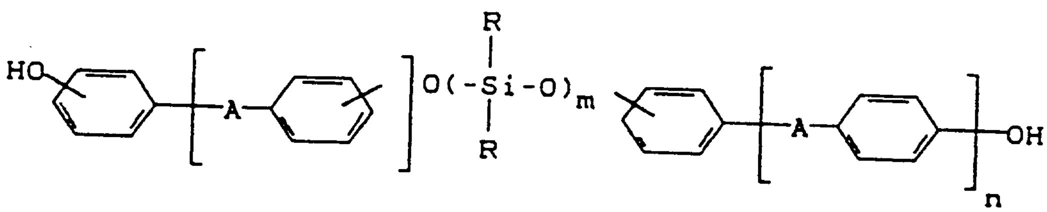

(IVa)

dans lesquelles

A représente une liaison simple, un groupe alkylène en $C_1$-$C_5$, alkylidène en $C_2$-$C_5$, cycloalkylidène en $C_2$-$C_5$, qui peut encore être substitué par des groupes méthyle, -O-, -S- ou -$SO_2$-, les motifs aromatiques pouvant être substitués par des atomes d'halogènes,

n est égal à 1 ou 0,

les symboles R, ayant des significations identiques ou différentes, représentent chacun un groupe alkyle linéaire en $C_1$-$C_{20}$, un groupe alkyle ramifié en $C_3$-$C_{20}$ ou un groupe aryle en $C_6$-$C_{20}$, de préférence $CH_3$ et

m est un ombre allant de 5 à 100, de préférence de 20 à 80, la proportion en poids des diphénols de formule IVa) dans les copolycarbonates étant réglée dans chaque cas en sorte que la teneur en motifs diorganosiloxy V

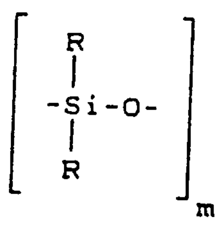

(V)

du polycarbonate A) soit de 1 à 25 % en poids.

**5.** Matières a mouler en polycarbonates selon revendication 1, caractérisées en ce que le composant A) consiste en un mélange de polycarbonates contenant des siloxanes et de polycarbonates exempts de siloxane.

**6.** Matières a mouler selon revendication 1, caractérisées en ce que C) a été préparé à partir de

C.1) 30 à 80 parties en poids d'un mélange de C.1.1) et de C.1.2) et
C.2) 20 à 70 parties en poids.

**7.** Matières à mouler selon revendication 1, caractérisées en ce que le composant E) est mis en oeuvre sous la forme d'un mélange coagulé d'une émulsion du polymère de tétrafluoréthylène E) avec une émulsion du polymère greffé C), avec des proportions relatives en poids de 95:5 à 60:40 entre le polymère greffé C) et le polymère du tétrafluoréthylène E), et la teneur en le coprécipité de C) et E), pour 100 parties en poids de A), B) et C), est de 0,1 à 20,0 parties en poids.

**8.** Matières à mouler selon revendication 1, caractérisées en ce que le composant F) est mis en oeuvre à l'état de mélange coagulé d'une émulsion de la résine de silicone F) et d'une émulsion du polymère greffé C), avec des proportions relatives en poids de 99,9:0,1 à 50:50 entre le polymère greffé C) et la résine de silicone F), et la teneur en le coprécipité de C) et F), pour 100 parties en poids de A), B) et C), est de 0,1 à 30,0 parties en poids.

**9.** Matières à mouler selon revendication 1, contenant en outre des esters d'acides polyalkylène-carboxyliques thermoplastiques, des polysulfones thermoplastiques, des polyéther-sulfones thermoplastiques, des polycétones thermoplastiques, des polyéther-cétones thermoplastiques, des éthers de polyphénylène thermoplastiques, des sulfures de polyarylène thermoplastiques, des stabilisants, des pigments, des agents fluidifiants, des agents de démoulage, des agents antistatiques et/ou d'autres agents ignifugeants.

**10.** Procédé de préparation des matières à mouler en polycarbonates des revendications 1 à 9, caractérisé en ce que l'on mélange de manière connue les composants A), B), D) et le cas échéant les composants C) et/ou E) et/ou F) et/ou le cas échéant des esters d'acides polyalkylène-carboxyliques thermoplastiques, des polysulfones thermoplastiques, des polyéther-sulfones thermoplastiques, des polycétones thermoplastiques, des polyéther-cétones thermoplastiques, des éthers de polyphénylène thermoplastiques, des sulfures de polyarylène thermoplastiques, des stabilisants, des pigments, des agents fluidifiants, des agents de démoulage, des agents antistatiques et/ou d'autres agents ignifugeants et on poursuit le mélange à l'état fondu ou on extrude à l'état fondu à des températures de 200 à 330 °C dans des appareillages usuels, ou bien on mélange des solutions des constituants en question et on évapore le mélange des solutions dans des appareillages usuels.